# EUROPÄISCHE PATENTSCHRIFT

(11) **EP 2 181 376 B1**
(45) Veröffentlichungstag und Bekanntmachung des Hinweises auf die Patenterteilung: **01.08.2012**
(21) Anmeldenummer: 08801628.2
(22) Anmeldetag: 20.08.2008
(51) Int. Cl.: G05D 23/10, E03C 1/044

(54) **VENTILELEMENT SOWIE THERMOSTATISCHE REGELEINRICHTUNG ZUR REGELUNG EINES MASSENSTROMES**
VALVE ELEMENT AND THERMOSTATIC CONTROL DEVICE FOR CONTROLLING A MASS FLOW
ÉLÉMENT SOUPAPE ET DISPOSITIF DE RÉGULATION THERMOSTATIQUE SERVANT À RÉGULER UN DÉBIT MASSIQUE

(30) Priorität: 21.08.2007 DE 102007039495; 28.02.2008 DE 102008011529; 08.05.2008 DE 102008022886
(43) Veröffentlichungstag der Anmeldung: 05.05.2010
(60) Teilanmeldung: 12155861.3
(73) Patentinhaber: Otto Egelhof GmbH & Co. KG, 70736 Fellbach (DE)
(72) Erfinder: SOHN, Jürgen, 73732 Esslingen (DE)
(74) Vertreter: Maser, Jochen
(86) Internationale Anmeldenummer: PCT/EP2008/006843
(87) Internationale Veröffentlichungsnummer: WO 2009/024334

(56) Entgegenhaltungen:
- DE-U1- 29 805 473
- GB-A- 2 274 500
- US-A- 4 778 104
- US-A- 5 397 053
- US-A- 5 878 949

## Beschreibung

Die Erfindung betrifft ein Ventilelement sowie ein thermostatische Regeleinrichtung zur Regelung eines Massenstromes.

Aus der GB 2 274 500 A geht eine Handbrause hervor, in dessen Handgriff ein Ventilelement angeordnet ist. Dieses Ventilelement umfasst ein Ventilschließglied, welches mit einem thermischen Stellglied aus einer Formgedächtnislegierung aus einer Öffnungsposition in eine Schließposition in einen Ventilsitz überführbar ist. Dem thermischen Stellglied wirkt ein Kraftspeicherelement entgegen. Dieses Ventilelement wird nach und nach mit seinen einzelnen Komponenten in den Handgriff der Handbrause eingesetzt, wobei der Handgriff der Handbrause einen Gehäuseabschnitt bildet, der das Ventilelement vollständig umgibt.

Aus der D2 geht ein Ventilelement für einen Duschkopf hervor, welches einen Gehäuseabschnitt aufweist, an dem ein thermisches Stellglied aus einer Formgedächtnislegierung angreift, das unmittelbar ein Ventilschießglied betätigt. Zwischen dem Gehäuseabschnitt und einer daran befestigten Einstellschraube ist ein Federelement angeordnet, welches dem thermischen Stellglied entgegenwirkt und in diesem angeordnet ist. Sofern eine überhöhte Temperatur das Ventilelement umströmt, wird das Ventilschließglied in dem Ventilsitz durch das thermische Stellglied übergeführt, wobei gleichzeitig eine Bypassöffnung geöffnet wird, welche sich durch das Ventilschließglied hindurch erstreckt.

Aus der US 5,878,949 ist ein Mischventil bekannt, welches manuell in einen ersten Schaltzustand übergeführt wird und bei einer Schalttemperatur sich selbständig in einen zweiten selbsthaltenden Schaltzustand überführt.

Aus der DE 298 05 479 U1 ist ein Rücklauftemperaturbegrenzer bekannt, der eine Schließbewegung auf das Ventilschließglied über einen Dehnstoffkörper ausführt. Dieser Dehnstoffkörper umfasst ein Wachsdehnelement, welches bei einer bestimmten Temperatur sein Aggregatzustand ändert und die Stellbewegung ausübt. Solche Dehnstoffkörper sind im Ansprechverhalten sehr träge.

Aus der DE 298 05 473 U1 geht ein thermostatisches Ventil als Rücklaufbegrenzung für eine Fußbodenheizung hervor, welches an einem Gehäuse eine Einlass- und Auslassöffnung für ein zu regelnden Massenstrom umfasst. Der Einlassöffnung ist eine Durchtrittsöffnung in eine Kammer zugeordnet, an der ein Ventilsitz ausgebildet ist, so dass die Durchlassöffnung durch ein in dem Ventilsitz angeordneten Ventilschließglied verschließbar ist. In der Kammer des Gehäuses ist eine Feder angeordnet, die in Strömungsrichtung des Massenstromes wirkt. Das Ventilschließglied wird durch einen Dehnstoffkörper angesteuert. Hierbei handelt es sich um sogenannte Wachsdehnelemente, welche Paraffine enthalten. Ab einer bestimmten Temperatur ändert sich der Aggregatzustand des Paraffins von fest in flüssig, wodurch eine Stellbewegung auf das Ventilschließglied ausgeübt wird. Dadurch wird das Rücklauftemperaturbegrenzungsventil geschlossen, sobald der Massenstrom eine vorbestimmte Temperatur übersteigt. Solche Rücklauftemperaturbegrenzungsventile werden bevorzugt in Heizungsanlagen eingesetzt, bei denen sowohl eine Fußbodenheizung als auch ein Radiatorheizkörper bzw. ein Flächenheizkörper durch einen gemeinsamen Vor- und Rücklauf versorgt werden. Durch die Rücklauftemperaturbegrenzer soll erzielt werden, dass die Fußbodenheizung nicht mit einer erhöhten Vorlauftemperatur durchströmt wird. Des Weiteren soll dadurch sichergestellt werden, dass eine maximal zulässige Estrichtemperatur nicht überschritten wird.

Solche Rücklauftemperaturbegrenzungsventile sind einem Fußbodenheizkreislauf nachgeschalten und regeln dadurch die Temperatur des Massenstromes am Ende der Heizschlangen der Fußbodenheizung ohne dass über die Temperaturverhältnisse am Eingang zur Fußbodenheizung eine Aussage über die Temperatur getroffen werden kann. Darüber hinaus weisen solche Rücklauftemperaturbegrenzungsventile den Nachteil auf, im Einsatz nur auf diesen speziellen Anwendungsfall beschränkt zu sein.

Im modernen Heizungsbau besteht insbesondere bei Mehrfamilienhäusern der Bedarf an einer flexibel aufbaubaren Heizungsanlage, d.h., dass erst zu einem späten Zeitpunkt der Bauphase eine durch den Eigentümer erfolgende Festlegung für die einzubauende Heizung in dem jeweiligen Raum erfolgen kann. Darüber hinaus besteht bei bereits vorhandenen thermostatischen Regeleinrichtungen der Bedarf an einer Umrüstung oder Sanierung durch neue Ventilelemente.

Der Erfindung liegt deshalb die Aufgabe zugrunde, ein Ventilelement sowie eine thermostatische Regeleinrichtung zur Regelung eines Massenstromes vorzuschlagen, welche eine flexible Anpassung zur Regelung einer Flächenheizung zumindest in einem Raum ermöglicht.

Diese Aufgabe wird erfindungsgemäß durch ein Ventilelement gemäß den Merkmalen des Anspruchs 1 gelöst. Durch das erfindungsgemäße Ventilelement mit einem thermischen Stellglied, welches eine temperaturabhängige Stellbewegung auf das Ventilschließglied bewirkt, wird ermöglicht, dass die Temperatur im Vorlauf als maßgebliche Stellgröße erfasst wird. Somit kann das erfindungsgemäße Ventilelement zur Niedrigtemperaturregelung eines Massenstromes eingesetzt werden, insbesondere zur Ansteuerung einer Flächenheizung, wie beispielsweise einer Wand-, Decken- oder Fußbodenheizung, bei welcher die Vorlauftemperatur üblicherweise in einem Bereich zwischen 30 und 45 °C des Massenstromes liegt. Durch dieses Ventilelement als Baueinheit, die als Einbaupatrone vorgesehen ist, wird ermöglicht, dass beispielsweise bei einer bestehenden Installation, bei der Radiatorheizungen vorgesehen waren, eine Flächenheizung nachträglich vorgesehen werden kann. Durch den Austausch des bisherigen Ventilelementes durch das erfindungsgemäße Ventilelement kann eine Niedrigtemperaturregelung erzielt werden. Darüber hinaus weist-dieses Ventilelement den Vorteil auf, dass bzgl. dem Gehäuseabschnitt, dem Übertragungsstift und dem Ventilschließglied baugleich zu bereits eingesetzten Ventilelementen ist, welche zur Raumtemperaturregelung bei Radiatorheizungen eingesetzt werden, so dass ohne weitere bauliche Maßnahmen oder einer Änderung des Grundaufbaus der thermostatischen Regeleinrichtung eine Umrüstung auf eine Niedrigtemperaturregelung ermöglicht ist. Des Weiteren weist das erfindungsgemäße Ventilelement den Vorteil auf, dass die Heizungsinstallation während der Rohbauphase zu einem Großteil fertiggestellt werden kann und erst bei dem beginnenden Innenausbau bedarfsmäßig eine Festlegung für die in dem jeweiligen Raum vorzusehende Heizung erfolgen kann, da durch die Verwendung eines herkömmlichen Ventilelementes oder dem erfindungsgemäßen Ventilelement eine einfache und schnelle Anpassung auf die jeweilige Anforderung für die zur regelnden Temperaturen ermöglicht ist. Dadurch werden ein Zeitgewinn während der Bauphase und auch eine Vereinfachung in der Ausschreibung für Heizungsanlagen erzielt.

Die Ausgestaltung des erfindungsgemäßen Ventilelementes als Einbaupatrone weist des Weiteren den Vorteil auf, dass bestehende thermostatische Regeleinrichtungen nachgerüstet und auch umgerüstet werden können, so dass eine Anpassung an den jeweiligen Regelungsbedarf in Abhängigkeit der Umrüstung oder Sanierung von beispielsweise der Heizungsanlage gegeben ist.

Einer bevorzugten Ausgestaltung der Erfindung ist vorgesehen, dass an einem dem Ventilsitz gegenüberliegenden Ende des Übertragungsstiftes eine Betätigungsvorrichtung anbringbar ist. Diese Betätigungsvorrichtung kann bspw. eine Temperaturregeleinrichtung mit einem Temperaturfühler sein, die durch ein Kapillarrohr miteinander verbunden sind. Entsprechend der erfassten Temperatur durch den Temperaturfühler wird eine Stellbewegung bewirkt, die die Temperaturregeleinrichtung auf den Übertragungsstift überträgt und somit die Öffnungs- und Schließposition des Ventilschließgliedes in Abhängigkeit der erfassten Temperatur, beispielsweise Umgebungs- oder Raumtemperatur bestimmt wird. Ebenfalls kann auch ein Thermokopf mit einer Gasfüllung vorgesehen sein.

Das Ventilelement weist gemäß einer bevorzugten Ausführungsform in dem Gehäuseabschnitt eine Kammer auf, welche von dem Übertragungsstift durchquert ist. In der Kammer ist bevorzugt ein Kraftspeicherelement vorgesehen, welches mit einem Ende an einem Kammerboden anliegt und mit dem gegenüberliegenden Ende am Übertragungsstift sich abstützt. Dadurch wird der Übertragungsstift und somit das Ventilschließglied in einer Ausgangslage gehalten. Diese Ausgangslage kann durch eine Einstellung der Betätigungsvorrichtung überlagert sein, welche durch eine Voreinstellung des Benutzers erfolgt. Dadurch kann in der Ausgangslage ein konstanter Drosselquerschnitt freigegeben sein. Sobald die Temperatur des zu regelnden Massenstromes über einen Grenzwert ansteigt, wird über das thermische Stellglied eine Stellbewegung eingeleitet, wodurch das Ventilelement durch das Ventilschließglied einen Ventilsitz schließt oder die Durchflussmenge des Massenstroms reduziert.

Nach einer weiteren bevorzugten Ausführungsform der Erfindung ist vorgesehen, dass der Gehäuseabschnitt zumindest zweiteilig ausgebildet ist. Dadurch wird eine einfache Montage des Übertragungsstiftes und dem zumindest einen in der Kammer des Gehäuseabschnittes angeordneten Kraftspeicherelementes ermöglicht. Bevorzugt ist zwischen dem ersten und zweiten Teil des Gehäuseabschnitts eine Schraubverbindung oder lösbare Klemmverbindung vorgesehen. Alternativ kann auch eine unlösbare Verbindung durch einen Presssitz, eine Klemmung oder eine Rastverbindung vorgesehen sein.

Der Gehäuseabschnitt des Ventilelementes weist bevorzugt Führungsöffnungen zur verschiebbaren Aufnahme des Übertragungsstiftes auf, wobei die Führungen vorzugsweise zumindest ein Dichtungs- oder Gleitelement umfassen. Dadurch wird eine leichtgängige Anordnung und Führung des Übertragungsstiftes zum Gehäuseabschnitt ermöglicht. Gleichzeitig wird verhindert, dass der zu regelnde Massenstrom in die Kammer des Gehäuseabschnittes eintritt, insbesondere das in der jeweiligen Führungsöffnung angeordnete Führungselement gleichzeitig auch eine Dichtfunktion übernimmt.

Des Weiteren ist bevorzugt vorgesehen, dass auf dem Gehäuseabschnitt eine Einstellhülse vorgesehen ist, welche in axialer Richtung zum Gehäuseabschnitt einstellbar ist. Dadurch kann beim Einbau des Ventilelementes in die thermostatische Regeleinrichtung eine Voreinstellung des Ventilelementes zum Ventilsitz zur Drosselung eines Massenstromes erfolgen, so dass beispielsweise ein hydraulischer Ausgleich im Heizungssystem ermöglicht ist. Darüber hinaus kann eine Feinjustierung und exakte Einstellung des Ventilelementes zur Einstellung der thermostatischen Regeleinrichtung vorgesehen sein. Ein solches Ventilelement mit einem thermischen Stellglied und einer Einstellhülse ermöglicht gleichzeitig eine Vorlauftemperaturregelung und einen hydraulischen Abgleich in Heizungsanlagen. Ein solches Ventilelement kann in einer thermostatischen Regeleinrichtung mit einem Thermostatventil zum Einsatz gelangen, welche zur Raum- bzw. Umgebungstemperaturregelung vorgesehen ist.

Nach einer weiteren bevorzugten Ausgestaltung der Erfindung ist vorgesehen, dass ein an dem Übertragungsstift oder dem Ventilschließglied angeordnetes Spannelement lösbar zum Übertragungsstift oder Ventilelement vorgesehen ist. Dieses Spannelement dient zur Positionierung des thermischen Stellgliedes zwischen dem Gehäuseabschnitt und dem Ventilschließglied, um eine Stellbewegung des Ventilschließgliedes in Abhängigkeit der erfassten Temperatur des anliegenden Massenstromes zu ermöglichen. Durch die lösbare Anordnung des Spannelementes kann das Ventilelement in einfacher Weise auf ein herkömmliches Ventilelement umgerüstet werden, indem das Spannelement von dem Übertragungsstift oder Ventilschließglied entfernt und anschließend das thermische Stellglied abgenommen wird. Somit ist das Ventilelement in einfacher Weise auf verschiedene Anwendungen anpassbar.

Des Weiteren ist bevorzugt vorgesehen, dass am Übertragungsstift zwischen dem Gehäuseabschnitt und dem Ventilschließglied ein Spannelement vorgesehen ist, an der das thermische Stellglied anliegt und dass das Spannelement in axialer Richtung entlang des Übertragungsstifts im Abstand zum Ventilschließglied einstellbar ist. Dadurch kann eine Vorspannung auf das thermische Stellglied aufgebracht werden, so dass ein vorbestimmter Arbeitspunkt oder Schaltzeitpunkt eingestellt werdenkann. Dies bedeutet, dass eine Ausdehnungsbewegung des thermischen Stellgliedes bzw. eine Stellbewegung des thermischen Stellgliedes erst ab einer vorbestimmten Temperatur des Massenstromes erfolgt. Diese Voreinstellung wird bevorzugt auf die Rückstellkraft des Kraftspeicherelementes abgestimmt, um ein gewünschtes Regelverhalten zu erzielen.

Die der Erfindung zugrundeliegende Aufgabe wird des Weiteren durch die Merkmale des Anspruchs 8 gelöst. Die thermostatische Regeleinrichtung ermöglicht durch die wahlweise Anordnung eines Ventilelementes nach einem der Ansprüche 1 bis 7, einen flexiblen Aufbau der thermostatischen Regeleinrichtung. Somit kann in eine Leitungsanordnung der thermostatischen Regeleinrichtung in Abhängigkeit des Einsatzfalles zur Regelung einer Radiator- oder Flächenheizung bestückt und angepasst werden.

Nach einer bevorzugten Ausgestaltung der thermostatischen Regeleinrichtung ist vorgesehen, dass das Ventilelement mit dem thermischen Stellglied und mit einer Betätigungseinrichtung einen Durchgang im ersten Rohrabschnitt und ein Ventilelement für einen hydraulischen Abgleich ein Durchgang im zweiten Rohrabschnitt ansteuert. Dadurch kann eine thermostatische Regeleinrichtung geschaffen werden, bei der eine Regelung der Raumlufttemperatur über die Vorlauftemperatur erfolgt und durch eine Voreinstellung des Ventilelementes im zweiten Rohrabschnitt der hydraulischen Abgleich ermöglicht ist.

Nach einer alternativen Ausgestaltung der thermostatische Regeleinrichtung ist vorgesehen, dass ein Thermostatventil zur Regelung einer Raumtemperatur einen Durchgang im ersten Rohrabschnitt steuert und das Ventilelement mit dem thermischen Stellglied und einer am Gehäuseabschnitt angeordneten Einstellhülse einen Durchgang im zweiten Rohrabschnitt steuert. Durch die Einstellhülse kann die Funktion des hydraulischen Abgleichs eingestellt werden und gleichzeitig durch das thermische Stellglied des Ventilelementes eine Vorlauftemperaturregelung gegeben sein, wobei im ersten Rohrabschnitt ein herkömmliches Thermostatventil für die Raumluftregelung eingesetzt werden kann.

Nach einer weiteren alternativen Ausgestaltung der thermostatischen Regeleinrichtung ist vorgesehen, dass das Ventilelement mit dem thermischen Stellglied eine Betätigungseinrichtung zur Regelung einer Raumtemperatur aufweist, welche zwischen dem Gehäuseabschnitt und dem Übertragungsstift wirkt und dass dieses Ventilelement mit einer Einstellhülse am Gehäuseabschnitt ausgebildet und am Anschlusselement des ersten oder zweiten Rohrabschnitt anordenbar ist. An dem anderen Rohrabschnitt ist ein Verschlussstopfen an dessen Anschlusselement vorgesehen. Dadurch kann die bisher bestehende thermostatische Regeleinrichtung bzw. deren Leitungsanordnung mit nur einem Ventilelement nachgerüstet werden, um die in dem jeweiligen Raum erforderliche Vorlauftemperatur zur Versorgung der Flächenheizung zu ermöglichen.

Eine weitere vorteilhafte Ausgestaltung der Erfindung sieht vor, dass die zwischen einem Vorlauf bzw. Rücklauf in der Leitungsanordnung sich befindliche Temperatur des Massenstromes die Stellbewegung des thermischen Stellgliedes bewirkt. Dadurch, dass das thermische Stellglied des Ventilelementes unmittelbar mit dem Massenstrom in Kontakt steht, der in der Leitungsanordnung vorliegt, wird eine exakte Ansteuerung des Ventilelementes und somit der thermostatischen Regeleinrichtung sichergestellt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht des erfindungsgemäßen Ventilelements für eine thermostatische Regeleinrichtung,
- Figur2: eine alternative Ausführungsform des Ventilelementes zu Figur 1,
- Figur 3: eine schematische Ansicht einer Einbausituation von thermostatischen Regeleinrichtungen und
- Figur 4a: eine schematisch vergrößerte Ansicht gemäß einer ersten Ausführungsform einer thermostatischen Regeleinrichtung mit dem Ventilelement,
- Figur 4b: eine schematisch vergrößerte Ansicht gemäß einer zweiten Ausführungsform einer thermostatischen Regeleinrichtung mit dem Ventilelement, und
- Figur 4c: eine schematisch vergrößerte Ansicht gemäß einer dritten Ausführungsform einer thermostatischen Regeleinrichtung mit dem Ventilelement.

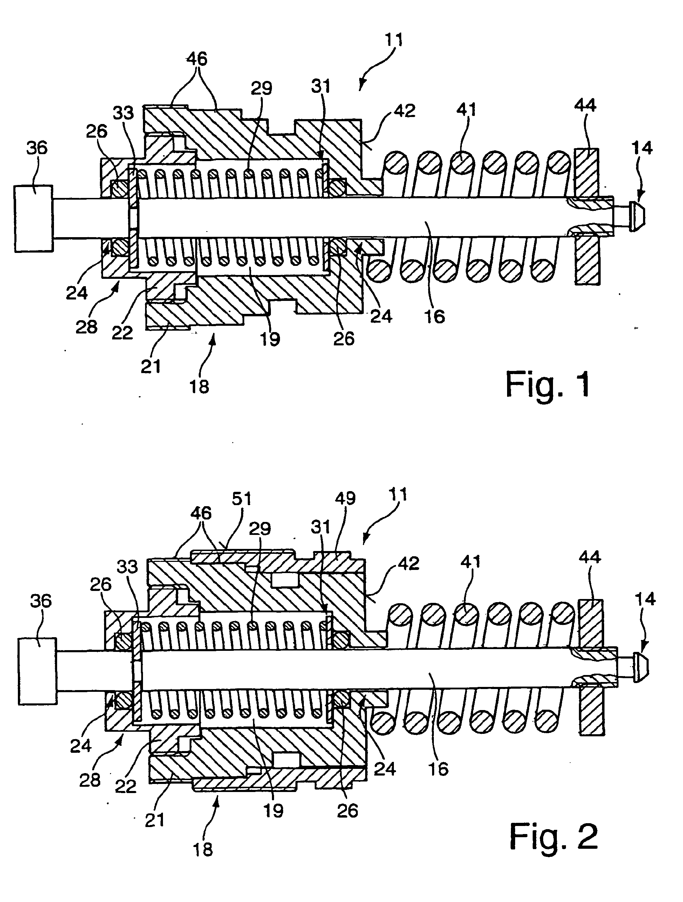

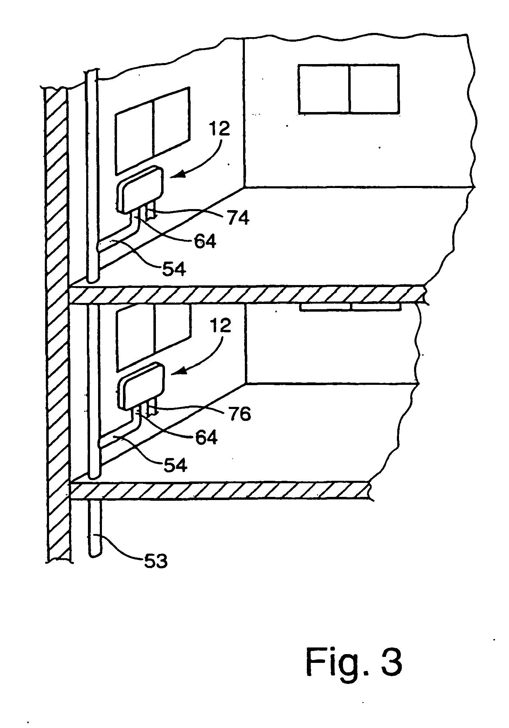

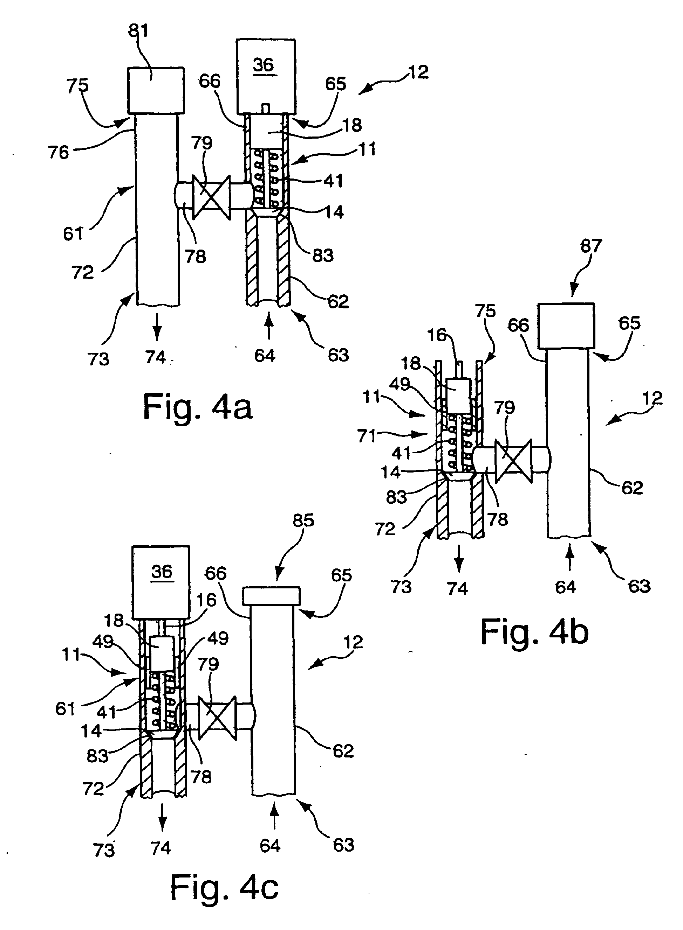

In Figur 1 ist eine schematische Schnittdarstellung eines Ventilelementes 11 dargestellt. Dieses Ventilelement 11 ist bevorzugt als Einbaupatrone ausgebildet und für den Einsatz in thermostatischen Regeleinrichtungen 12 vorgesehen, welche bzgl. deren Einbauort in Figur 3 und bzgl. deren Aufbau beispielhaft in den Figuren 4a bis c näher dargestellt und beschrieben wird.

Das Ventilelement 11 umfasst ein Ventilschließglied 14, welches relativ zu einem Ventilsitz in der thermostatischen Regeleinrichtung 12 zur Regelung eines Massenstromes bewegbar ist. Das Ventilschließglied 14 umfasst bspw. ein Übertragungsstift 16, der durch einen Gehäuseabschnitt 18 axial verschiebbar geführt ist. Bevorzugt durchdringt der Übertragungsstift 16 eine Kammer 19 im Gehäuseabschnitt 18 und wird auf der gegenüberliegenden Seite aus dem Gehäuseabschnitt 18 herausgeführt. Der Gehäuseabschnitt 18 weist ein erstes bevorzugt U-förmig ausgebildetes Teil 21 und ein zweites Teil 22 auf, das durch eine lösbare Verbindung, insbesondere eine Schraubverbindung, zueinander befestigt ist. Alternativ kann auch eine unlösbare Verbindung, wie beispielsweise ein Presssitz oder eine Rastverbindung, vorgesehen sein. Im ersten Teil 21 ist eine Führungsöffnung 24 vorgesehen, die einer Führungsöffnung 24 im zweiten Teil gegenüberliegt. Die Führungsöffnungen 24 nehmen bevorzugt ein Dichtungs- und/oder Führungselement 26 auf, um den Übertragungsstift 16 leichtgängig zu führen und bevorzugt die Kammer 19 abzudichten.

Zur Anordnung des Ventilschließgliedes 14 in einer Ausgangslage 28 ist in der Kammer 19 ein Kraftspeicherelement 29, insbesondere eine Druckfeder, vorgesehen. Diese liegt mit ihrem einen Ende an einem Kammerboden 31 an, der bspw. als Lochscheibe ausgebildet ist und sich an einer Schulter des Teils 21 abstützt. Alternativ kann sich das Kraftspeicherelement 29 auch unmittelbar am Teil 21 abstützen. Gegenüberliegend ist ein Anschlag 33 vorgesehen, der an dem Übertragungsstift 16 angreift. Bspw. ist dieser Anschlag 33 in einer U-förmigen Vertiefung des Übertragungsstiftes 16 fixiert und als Scheibe ausgebildet. Ebenso kann ein Stift quer zum Übertragungsstift 16 eingebracht sein, um als Anschlag 33 zu dienen. Des Weiteren kann alternativ vorgesehen sein, dass der Übertragungsstift 16 einen einstückig daran angeformten oder aufgepressten Anschlag 33 umfasst. Des Weiteren liegt der Anschlag 33 an dem Teil 22 an, wodurch die eine Bewegungsrichtung des Ventilschließgliedes 14, die durch das Kraftspeicherelement 29 erzeugt wird, begrenzt ist.

An einem dem Ventilschließglied 14 gegenüberliegenden Ende des Übertragungsstiftes 16 greift eine nur schematisch dargestellte Betätigungsvorrichtung 36 an, welche bspw. als Temperaturregeleinrichtung ausgebildet ist. Dies kann ein Thermokopf als auch ein Temperaturfühler sein, der mit einem Temperaturregler eine Hubbewegung des Übertragungsstiftes 16 ansteuert.

Außerhalb des Gehäuseabschnittes 18 und bevorzugt den Übertragungsstift 16 umgebend ist ein thermisches Stellglied 41 vorgesehen, welches sich an einem Ende an einer Abstützfläche 42 des Gehäuseabschnittes 18 abstützt und gegenüberliegend an einem Spannelement 44, welches am Übertragungsstift 16 lösbar befestigt ist. Dieses Spannelement 44 kann alternativ auch an dem Ventilschließglied 14 lösbar befestigt sein, so dass nach dem Abnehmen des Spannelementes 44 von dem Übertragungsstift 16 oder dem Ventilschließglied 14 ein Herausnehmen des thermischen Stellgliedes 41 als auch ein Austausch des thermischen Stellgliedes 41 ermöglicht ist.

Durch die Einstellung eines Abstandes zwischen der Spannplatte 44 und dem Ventilschließglied 14 bzw. der Abstützfläche 42 des Gehäuseabschnitts 18 wird das thermische Stellglied 41 vorgespannt, so dass deren Arbeitspunkt erst ab einer vorbestimmten Temperatur beginnt.

Das thermostatische Stellglied 41 ist aus einer sogenannten Formgedächtnislegierung hergestellt. Solche Formgedächtnislegierungen, die auch als SMA-Legierungen (shape memory alloy) bezeichnet werden, bestehen bspw. aus einer TiNi-Legierung, aus einer Legierung auf Cubasis, Fe-Basis oder aus einem Memory-Kunststoff. Solche Formgedächtnislegierungen ermöglichen ab einem bestimmten Temperaturwert eine Stellbewegung. Solche Formgedächtnislegierungen ändern ihren Aggregatzustand im Gegensatz zu Wachsdehnelementen nicht. Dadurch ist eine schnelle Reaktionszeit gegeben. Darüber hinaus weisen solche Formgedächtnislegierung den Vorteil auf, dass hohe Schließkräfte bewirkt werden können, so dass auch ab einem vorbestimmbaren Temperaturwert das thermische Stellglied 41 eine Rückstellkraft des Kraftspeicherelementes 29 überwindet, welches das Ventilschließglied 14 in einer Ausgangslage 28 anordnet, sofern ein bestimmter Temperaturwert nicht erreicht ist und das thermische Stellglied 41 inaktiv ist. Durch die Anordnung gemäß dem Ausführungsbeispiel ist bevorzugt ein platzsparender Aufbau gegeben.

Der Gehäuseabschnitt 18 weist an seinem Außenumfang, insbesondere am ersten Teil 21, einen Gewindeabschnitt 46 oder einen Befestigungsabschnitt auf, um das Ventilelement 11 in einer Einbaulage zum Ventilsitz zu fixieren.

In Figur 2 ist eine vorteilhafte Weiterbildung des Ventilelementes 11 gemäß Figur 1 dargestellt. Im Hinblick auf die übereinstimmenden Merkmale wird auf Figur 1 Bezug genommen. Bei dieser Ausführungsform ist zusätzlich vorgesehen, dass der Gehäuseabschnitt 18, insbesondere das Teil 21, durch eine Einstellhülse 49 zumindest abschnittsweise umgeben ist. Diese Einstellhülse 49 greift bevorzugt an dem Gewindeabschnitt 46 an und ist dadurch in seiner axialen Position gegenüber dem Gehäuseabschnitt 18 veränderbar. Ein Außenumfang der Einstellhülse 49 weist wiederum einen Gewindeabschnitt 51 oder einen Befestigungsabschnitt auf, um das Ventilelement 11 in der thermostatischen Regeleinrichtung 12 zu fixieren. Durch diese Einstellhülse 49 kann ein hydraulischer Abgleich eingestellt werden, indem bspw. das Ventilelement 11 derart positioniert wird, dass bei der Anordnung des Ventilschließgliedes 14 in einer Ausgangslage 28 ein konstanter Durchflussquerschnitt für einen Massenstrom durch den Ventilsitz hindurch freigegeben ist.

In Figur 3 ist schematisch eine Einbausituation der thermostatischen Regeleinrichtung 12 dargestellt. Bspw. wird in einem Mehrfamilienhaus eine Steigleitung 53 installiert, wobei in jeder Etage und für jeden Raum ein Abzweig 54 von der Steigleitung 53 vorgesehen ist, der als Zulauf 64 zur thermostatischen Regeleinrichtung 12 führt. Die thermostatische Regeleinrichtung 12 umfasst einen Ablauf 74 der zur Radiatorheizung oder zur Flächenheizung führt.

In Figur 4a ist schematisch vergrößert eine Leitungsanordnung 61 der thermostatischen Regeleinrichtung 12 dargestellt. Diese Leitungsanordnung 61 umfasst einen ersten Rohrabschnitt 62, dessen eine Ende 63 mit einem Zulauf 64 in Verbindung steht. Am gegenüberliegenden Ende 65 ist ein Anschlusselement 66 an dem ersten Rohr 62 vorgesehen. Die Leitungsanordnung 61 umfasst des Weiteren einen zweiten Rohrabschnitt 72, an dessen einen Ende 73 ein Ablauf 74 anschließbar ist, der bspw. zu einer Fußbodenheizung oder zu einer Radiatorheizung führt. Diesem Ende 73 gegenüberliegend weist das Ende 75 ein Anschlusselement 76 auf. Zwischen dem ersten und dem zweiten Rohrleitungsabschnitt 62, 72 ist ein Verbindungsstück 78 vorgesehen, welches ein Absperr- oder Entlüftungsventil 79 aufweisen kann. Bevorzugt wird dadurch eine H-förmige Leitungsanordnung 61 ausgebildet.

Zur Regelung der Vorlauftemperatur für eine Flächenheizung mit beispielsweise einer Wand-, Decken- oder Fußbodenheizung wird gemäß Figur 4a in den ersten Rohrabschnitt 62 das Ventilelement 11 mit dem thermischen Stellglied eingesetzt und am Anschlusselement 66 befestigt. Am zweiten Rohrabschnitt 72 ist ein herkömmliches Drosselventil 81 für den hydraulischen Abgleich vorgesehen. Das Ventilelement 11 umfasst des Weiteren eine Betätigungseinrichtung 36 zur Raumtemperaturregelung. Durch diese Betätigungseinrichtung 36 stellt der Benutzer bedarfsmäßig die gewünschte Raumtemperatur ein. Dadurch wird die Ausgangslage 28 des Ventilschließgliedes 14 verändert und somit ein entsprechender konstanter Drosselquerschnitt freigegeben. Durch das erfindungsgemäße Ventilelement 11 und dessen Anordnung im Rohrabschnitt 62 wird die Schließ- und Öffnungsbewegung des Ventilelementes 11 über das thermische Stellglied 41 angesteuert, welche die Temperatur des Massenstromes sieht, welche im Rohrabschnitt 62 bzw. im Verbindungsstück 78 und/oder im zweiten Rohrabschnitt 72 vorliegt. Sofern bspw. die Vorlauftemperatur für eine Flächenheizung geregelt werden soll, wird eine Stellbewegung des thermischen Stellgliedes 41 dann erfolgen, wenn die Temperatur des Massenstromes größer 40 °C ist. Somit wird der Zulauf 64 bzw. ein im ersten Rohrabschnitt 62 vorgesehener Ventilsitz 83, der mit dem Ventilschließglied 14 zusammenwirkt, geschlossen. Sobald die Temperatur absinkt, nimmt die Druckkraft des thermischen Stellgliedes 41 ab und ein erhöhter Durchfluss wird ermöglicht.

Dieses Ventilelement 11 kann zur Nachrüstung oder Umrüstung einer Heizungsanlage von einer Radiatorheizung auf eine Flächenheizung eingesetzt werden. Sofern eine Erneuerung des Ventilelementes 11 bei weiterhin bestehender Radiatorheizungen erfolgen soll, kann das thermische Stellglied 41 entfernt werden und das Ventilelement 11 wiederum in die thermostatische Regeleinrichtung 12 eingesetzt werden.

In Figur 4b ist eine alternative Ausgestaltung einer thermostatischen Regeleinrichtung 12 dargestellt. Die bislang bei solchen Leitungsanordnungen 61 verwendeten Thermostatventile zur Regelung der Raumluft verbleiben auf dem Rohrabschnitt 62. Das erfindungsgemäße Ventilelement 11 wird am zweiten Rohrabschnitt 72 über das Anschlusselement 76 befestigt. Zur Befestigung des Ventilelementes 11 in dem zweiten Rohrabschnitt 72 ist auf dem Gehäuseabschnitt 18 die Einstellhülse 49 vorgesehen, so dass das Ventilelement 11 neben der Vorlauftemperaturregelung auch gleichzeitig die Funktion des hydraulischen Abgleichs übernimmt und das Ventilschließglied 14 zum Ventilsitz 83 über die Einstellhülse 49 derart positionierbar ist, dass der hydraulische Abgleich eingestellt ist.

In Figur 4c ist eine weitere alternative Ausgestaltung der thermostatischen Regeleinrichtung 12 dargestellt. Bspw. wird auf das zweite Ende 65 des ersten Rohrabschnitts 62 ein Verschlussstopfen 85 aufgebracht, um dieses Ende 65 zu schließen. Am zweiten Ende 75 des zweiten Rohrabschnitt 72 ist ein Ventilelement 11 vorgesehen, welches bspw. in Figur 2 dargestellt ist und eine Betätigungseinrichtung 36 umfasst, um eine Regelung der Raumlufttemperatur, die Einstellung des hydraulischen Abgleichs durch die Einstellhülse 49 und die Regelung der Vorlauftemperatur durch das thermische Stellglied 41 zu ermöglichen.

Der Einsatz der erfindungsgemäßen Ventilelemente 11 sowie den erfindungsgemäßen thermostatischen Regeleinrichtungen 12 ist nicht auf den Heizungsbau in Gebäuden beschränkt. Vielmehr können die thermostatische Regeleinrichtung 12 sowie das Ventilelement 11 zum Frostschutz in verschiedenen Anwendungsbereichen eingesetzt werden. Bspw. kann die Regeleinrichtung 12 als Frostschutz in Waschwasserbehälter für Kraftfahrzeuge oder in Wassertanks, insbesondere Frischwassertanks, vorgesehen sein. Solche Frischwassertanks können bspw. bei der Tierhaltung Einsatz finden, so dass nicht nur ein Frostschutz in den Wassertanks sondern auch bei Tiertränken auf der Weide oder in Ställen vorgesehen ist. Bspw. kann der Frostschutz auch bei Pferdetränken gegeben sein, welche in jeder Box für ein Pferd oder für mehrere Pferde vorgesehen sind.

Beim Einsatz des Ventilelementes 11 als Frostschutzregelventil ist der Arbeitspunkt des thermischen Stellgliedes 41 derart eingestellt, dass bei einem Abfall der Temperatur unter bspw. 4 °C eine Stellbewegung des thermischen Stellgliedes 41 angesteuert wird, um ein Abfließen der Flüssigkeit zu ermöglichen und um ein Gefrieren von der Flüssigkeit, vorzugsweise Wasser, in den Leitungen und/oder im Tank zu verhindern.

## Patentansprüche

1. Ventilelement für eine thermostatische Regeleinrichtung (12) zur Regelung eines Massenstromes mit einem Ventilschließglied (14), welches in einem Ventilsitz (83) anordenbar ist und durch einen - Übertragungsstift (16) betätigbar ist, mit einem Gehäuseabschnitt (18), in dem der Übertragungsstift (16) zumindest abschnittsweise geführt ist und mit zumindest einem Kraftspeicherelement (29), welches in dem Gehäuseabschnitt (18) vorgesehen ist und in eine erste Bewegungsrichtung wirkt, so dass das Ventilschließglied (14) in einer Ausgangslage (28) zum Gehäuseabschnitt (18) angeordnet ist, mit zumindest einem thermischen Stellglied (41) aus einer Formgedächtnislegierung, das sowohl an dem Gehäuseabschnitt (18) als auch an dem Ventilschließglied (14) angreift und eine der ersten Bewegungsrichtung entgegengesetzte Wirkrichtung aufweist und eine temperaturabhängige Stellbewegung auf das Ventilschließglied (14) entgegen dem zumindest einen Kraftspeicherelement (29) bewirkt, so dass die Stellkraft des thermischen Stellgliedes (41) größer als die des zumindest einen Kraftspeicherelementes (29) ist, **dadurch gekennzeichnet, dass** der Gehäuseabschnitt (18), das Ventilschließglied (14), der Übertragungsstift (16), das in dem Gehäuseabschnitt (18) angeordnete Kraftspeicherelement (29) und das thermische Stellglied (41) eine Baueinheit bilden und als Einbaupatrone ausgebildet sind.

2. Ventilelement nach Anspruch 1, **dadurch gekennzeichnet, dass** an einem dem Ventilschließglied (14) gegenüberliegenden Ende des Übertragungsstiftes (16) eine Betätigungsvorrichtung (36), insbesondere eine Temperaturregeleinrichtung oder ein Thermokopf, anbringbar ist.

3. Ventilelement nach Anspruch 1, **dadurch gekennzeichnet, dass** der Übertragungsstift (16) zumindest eine, vorzugsweise zweiteilig ausgebildete Kammer (19) in dem Gehäuseabschnitt (18) durchquert und dass in der zumindest einen Kammer (19) das Kraftspeicherelement (29) angeordnet ist, welches sich mit einem Ende am Kammerboden (31) und mit seinem anderen Ende am Übertragungsstift (16) abstützt und insbesondere der Übertragungsstift (16) in Führungsöffnungen (24) des Gehäuseabschnitts (18) geführt ist, die vorzugsweise ein Dichtungselement (26) aufnehmen.

4. Ventilelement nach Anspruch 1, **dadurch gekennzeichnet, dass** auf dem Gehäuseabschnitt (18) eine Einstellhülse (49) vorgesehen ist, welche in axialer Richtung zum Gehäuseabschnitt (18) einstellbar ist.

5. Ventilelement nach Anspruch 1, **dadurch gekennzeichnet, dass** zwischen dem Gehäuseabschnitt (18) und dem Ventilschließglied (14) eine Spannelement (44) vorgesehen ist, das in axialer Richtung entlang des Übertragungsstiftes (16) einstellbar ist.

6. Ventilelement nach Anspruch 1, **dadurch gekennzeichnet, dass** ein an dem Übertragungsstift (16) oder Ventilschließglied (14) angeordnetes Spannelement (44) lösbar zum Übertragungsstift (16) oder Ventilschließglied (14) vorgesehen ist.

7. Ventilelement nach Anspruch 1, **dadurch gekennzeichnet, dass** das thermische Stellglied (41) auf einen Arbeitspunkt einstellbar ist, welcher bei Frost eine Öffnungsbewegung des Ventilschließgliedes (14) bewirkt.

8. Thermostatische Regeleinrichtung zur Regelung eines Massenstromes mit einem Ventilelement (11) nach einem der Ansprüche 1 bis 7,
- **gekennzeichnet durch** eine Leitungsanordnung (61), die einen ersten Rohrabschnitt (62) umfasst, dessen eine Ende (63) mit einem Zulauf (64) verbindbar ist und dessen gegenüberliegendes Ende (65) ein Anschlusselement (66) aufweist,
- die einen zweiten Rohrabschnitt (72) umfasst, dessen eine Ende (73) mit einem Rücklauf (74) verbindbar ist und dessen gegenüberliegendes Ende (75) ein Anschlusselement (76) aufweist und
- die ein Verbindungsstück (78) umfasst, welches den ersten und zweiten Rohrabschnitt (62, 72) verbindet und jeweils zwischen den jeweiligen Enden (63, 65; 73, 75) der Rohrabschnitte (62, 72) in die Rohrabschnitte (62, 72) mündet,
wobei
- das Ventilschließglied (14) des Ventilelementes (11) vorgesehen ist, welches einem Ventilsitz (83) des ersten oder zweiten Rohrabschnitts (62, 72) zuordenbar und **durch** einen Übertragungsstift (16) betätigbar ist, der in dem Gehäuseabschnitt (18) des Ventilelementes (11) zumindest abschnittsweise geführt ist, wobei in dem Gehäuseabschnitt (18) zumindest ein Kraftspeicherelement (29) vorgesehen ist, welches in eine erste Bewegungsrichtung wirkt, so dass das Ventilschließglied (14) in einer Ausgangslage (28) zum Gehäuseabschnitt (18) angeordnet ist,
- dass das Ventilelement (11) zumindest ein thermisches Stellglied (41) aus einer Formgedächtnislegierung aufweist, welches sowohl an dem Gehäuseabschnitt (18) als auch an dem Ventilschließlied (14) oder Übertragungsstift (16) angreift und eine einer **durch** das Kraftspeicherelement (29) erzielten ersten Bewegungsrichtung entgegengesetzte Wirkrichtung aufweist.

9. Thermostatische Regeleinrichtung nach Anspruch 8, **dadurch gekennzeichnet, dass** das Ventilelement (11) einen Durchgang in Abhängigkeit der darin vorliegenden Temperatur des Massenstromes im ersten Rohrabschnitt (62) und ein Drosselventil (81) für einen hydraulischen Abgleich einen Durchgang im zweiten Rohrabschnitt (72) steuert oder dass ein Thermostatventil zur Regelung einer Raumtemperatur einen Durchgang des ersten Rohrabschnitts (62) steuert und das Ventilelement (11) einen Durchgang in Abhängigkeit der darin vorliegenden Temperatur des Massenstromes im zweiten Rohrabschnitt (72) steuert und das Ventilelement (11) mit einer Einstellhülse (49) im zweiten Rohrabschnitt (72) angeordnet ist oder dass das Ventilelement (11) eine Betätigungseinrichtung (36) zur Regelung einer Raumtemperatur aufweist, welches zwischen dem Gehäuseabschnitt (18) und dem Übertragungsstift (16) wirkt und dieses Ventilelement (11) mit einer Einstellhülse (49) ausgebildet ist, die axial zum Gehäuseabschnitt (18) verschiebbar ist und dass dieses Ventilelement (11) am Anschlusselement (66, 76) des ersten oder zweiten Rohrabschnitts (62, 72) anordenbar ist und an dem anderen Rohrabschnitt (72, 62) ein Verschlussstopfen (85) vorgesehen ist.

10. Thermostatische Regeleinrichtung nach Anspruch 9, **dadurch gekennzeichnet, dass** die zwischen dem Zulauf (64) und Rücklauf (74) in der Leitungsanordnung (61) sich befindliche Temperatur des Massenstromes die Stellbewegung des thermischen Stellgliedes (41) ansteuert.

## Claims

1. A valve member for a thermostatic control device (12) for regulating a mass flow, said valve member having a valve closure member (14) which is arranged in a valve seat (83) and is actuated by a transmission pin (16), a body portion (18) in which the transmission pin (16) is at least partially guided, and at least one energy storing member (29) which is provided in the body portion (18) and acts in a first direction of movement, such that the valve closure member (14) is arranged in a normal position (28) with respect to the body portion (18), and at least one thermal actuator (41) made of a shape memory alloy, which is applied to both the body portion (18) and the valve closure member (14) and has a direction of action that opposes said first direction of movement and causes a temperature-depending actuating movement to be exerted on the valve closure member (14) against the at least one energy storing member (29), such that the actuating force of the thermal actuator (41) is greater than that of the at least one energy storing member (29), **characterised in that** the body portion (18), the valve closure member (14), the transmission pin (16), the energy storing member (29) arranged in the body portion (18), and the thermal actuator (41) form a modular unit and are realised in the form of a built-in cartridge.

2. The valve member as claimed in claim 1, **characterised in that** on an end of the transmission pin (16) opposing the valve closure member (14) an actuating device (36), in particular a temperature regulating device or a thermal head, is fastened.

3. The valve member as claimed in claim 1, **characterised in that** the transmission pin (16) traverses at least one chamber (19), in particular one chamber (19) realised with two pieces, formed in the body portion (18) and that in the at least one chamber (19) the energy storing member (29) is arranged which abuts with one end on the chamber bottom (31) and with its other end on the transmission pin (16) and in particular the transmission pin (16) is guided in guide openings (24) of the body portion (18) which preferably accommodate a sealing member (26).

4. The valve member as claimed in claim 1, **characterised in that** on the body portion (18) an adjusting sleeve (49) is provided which is adjustable in an axial direction with respect to the body portion (18).

5. The valve member as claimed in claim 1, **characterised in that** between the body portion (18) and the valve closure member (14) a tensioning member (44) is provided which is adjustable in an axial direction along the transmission pin (16).

6. The valve member as claimed in claim 1, **characterised in that** a tensioning member (44) arranged on the transmission pin (16) or on the valve closure member (14) is provided in such a manner as to be releasable with respect to the transmission pin (16) or the valve closure member (14).

7. The valve member as claimed in claim 1, **characterised in that** the thermal actuator (41) is adjusted so as to have an operating point which causes an opening movement of the valve closure member (14) when the temperature falls below the freezing point.

8. A thermostatic control device for regulating a mass flow with a valve member (11) according to one of the claims 1 to 7, **characterized by**
- having a pipe arrangement (61) which comprises a first pipe portion (62) the one end (63) of which is connectable with a flow pipe (64) and the opposite end (65) of which has a connecting member (66),
- which comprises a second pipe portion (72) the one end (73) of which is connectable with a return pipe (74) and the opposite end (75) of which has a connecting member (76), and
- which comprises a connecting piece (78) that connects the first and second pipe portions (62, 72) and is interposed between the respective ends (63, 65; 73, 75) of the pipe portions (62, 72), leading respectively to either of said pipe portions (62, 72),
wherein
- the valve closure member (14) of the valve member (11), which may be associated with a valve seat (83) of the first or second pipe portion (62, 72) and is actuated by means of a transmission pin (16) which is at least partially guided in a body portion (18) of the valve member (11), said body portion (18) accommodating at least one energy storing member (29) which acts in a first direction of movement, such that the valve closure member (14) is disposed in a normal position (28) with respect to the body portion (18),
- the valve member (11) has at least one thermal actuator (41) made of a shape memory alloy which is applied to both the body portion (18) and the valve closure member (14) or the transmission pin (16) and has a direction of action that opposes a first direction of movement achieved by the energy storing member (29).

9. The thermostatic control device as claimed in claim 8, **characterised in that** the valve member (11) controls a through-passage in the first pipe portion (62) depending on the temperature of the mass flow present therein and that a throttle valve (81) for hydraulic compensation controls a through-passage in the second pipe portion (72) or that a thermostatic valve for regulating a room temperature controls a through-passage of the first pipe portion (62) and the valve member (11) controls a through-passage in the second pipe portion (72) depending on the temperature of the mass flow present therein, and the valve member (11) with an adjusting sleeve (49) is arranged in the second pipe portion (72) or
that the valve member (11) has an actuating device (36) for regulating a room temperature, which acts between the body portion (18) and the transmission pin (16), that this valve member (11) is formed with an adjusting sleeve (49) which is axially movable with respect to the body portion (18) and that this valve member (11) is arranged on the connecting member (66, 76) of the first or second pipe portion (62, 72), an obturating plug (85) being provided on the other pipe portion (72, 62).

10. The thermostatic control device as claimed in claim 9, **characterised in that** the temperature of the mass flow present between the flow pipe (64) and the return pipe (74) in the pipe arrangement (61) activates the actuating movement of the thermal actuator (41).

## Revendications

1. Elément de soupape pour un dispositif de régulation thermostatique (12) destiné à réguler un flux massique, avec un organe de fermeture de soupape (14) qui peut être disposé dans un siège de soupape (83) et qui peut être actionné par une tige de transmission (16), avec une partie de corps (18) dans laquelle est guidée au moins partiellement la tige de transmission (16), et avec au moins un élément accumulateur d'énergie (29) qui est prévu dans la partie de corps (18) et qui agit dans un premier sens de déplacement de sorte que l'organe de fermeture de soupape (14) est disposé dans une position initiale (28) par rapport à la partie de corps (18), avec au moins un organe de réglage thermique (41) réalisé en un alliage à mémoire de forme, lequel appuie non seulement contre la partie de corps (18) mais aussi contre l'organe de fermeture de soupape (14) et qui présente un sens d'action allant à l'opposé du premier sens de déplacement et provoque, en fonction de la température, un mouvement de réglage au niveau de l'organe de fermeture de soupape (14) allant à l'opposé dudit au moins un élément accumulateur d'énergie (29) de sorte que la puissance de réglage de l'organe de réglage thermique (41) est supérieure à celle dudit au moins un élément accumulateur d'énergie (29), **caractérisé en ce que** la partie de corps (18), l'organe de fermeture de soupape (14), la tige de transmission (16), l'élément accumulateur d'énergie (29) disposé dans la partie de corps (18) et l'organe de réglage thermique (41) forment un bloc fonctionnel et sont réalisés sous forme de cartouche à encastrer.

2. Elément de soupape selon la revendication 1, **caractérisé en ce qu'**un dispositif d'actionnement (36)., notamment un dispositif régulateur de température ou une tête thermique, peut être monté à une extrémité de la tige de transmission (16) située à l'opposé de l'organe de fermeture de soupape (14).

3. Elément de soupape selon la revendication 1, **caractérisé en ce que** la tige de transmission (16) traverse au moins une chambre (19), de préférence en deux parties, située dans la partie de corps (18), et **en ce que** dans ladite au moins une chambre (19) est disposé l'élément accumulateur d'énergie (29) qui s'appuie avec une extrémité contre le fond de chambre (31) et avec son autre extrémité contre la tige de transmission (16), et **en ce que** notamment la tige de transmission (16) est guidée dans des ouvertures de guidage (24) de la partie de corps (18), lesquelles reçoivent de préférence un élément d'étanchéité (26).

4. Elément de soupape selon la revendication 1, **caractérisé en ce que** sur la partie de corps (18) est prévue une douille de réglage (49) qui est réglable en sens axial par rapport à la partie de corps (18).

5. Elément de soupape selon la revendication 1, **caractérisé en ce qu'**entre la partie de corps (18) et l'organe de fermeture de soupape (14) est prévu un élément tendeur (44) qui est réglable en sens axial le long de la tige de transmission (16).

6. Elément de soupape selon la revendication 1, **caractérisé en ce qu'**un élément tendeur (44) disposé sur la tige de transmission (16) ou sur l'organe de fermeture de soupape (14) est prévu de manière amovible par rapport à la tige de transmission (16) ou à l'organe de fermeture de soupape (14).

7. Elément de soupape selon la revendication 1, **caractérisé en ce que** l'organe de réglage thermique (41) est réglable sur un point de fonctionnement qui provoque, en cas de gel, un mouvement d'ouverture de l'organe de fermeture de soupape (14).

8. Dispositif de régulation thermostatique destiné à réguler un flux massique, avec un élément de soupape (11) selon l'une quelconque des revendications 1 à 7, **caractérisé en ce que**
- une disposition de tuyaux (61) qui comprend un premier tronçon de tuyauterie (62) dont une extrémité (63) peut être reliée à un tuyau d'amenée (64) et dont l'extrémité opposée (65) présente un élément de raccordement (66),
- qui comprend un deuxième tronçon de tuyauterie (72) dont une extrémité (73) peut être reliée à un tuyau de retour (74) et dont l'extrémité opposée (75) présente un élément de raccordement (76), et
- qui comprend une pièce d'assemblage (78) qui relie le premier et le deuxième tronçon de tuyauterie (62, 72) et qui débouche entre les extrémités respectives (63, 65; 73, 75) des tronçons de tuyauterie (62, 72), respectivement dans les tronçons de tuyauterie (62, 72), cependant
- l'organe de fermeture de soupape (14) de l'élément de soupape (11) est prévu et peut être affecté à un siège de soupape (83) du premier ou du deuxième tronçon de tuyauterie (62, 72) et qui peut être actionné par une tige de transmission (16) qui est guidée du moins partiellement dans la partie de corps (18) de l'élément de soupape (11), dans ladite partie de corps (18) étant prévu au moins un élément accumulateur d'énergie (29) qui agit dans un premier sens de déplacement de sorte que l'organe de fermeture de soupape (14) est disposé dans une position initiale (28) par rapport à la partie de corps (18),
- l'élément de soupape (11) présente au moins un organe de réglage thermique (41) réalisé en un alliage à mémoire de forme, lequel appuie non seulement contre la partie de corps (18) mais aussi contre l'organe de fermeture de soupape (14) ou contre la tige de transmission (16) et qui présente un sens d'action allant à l'opposé d'un premier sens de déplacement réalisé par l'élément accumulateur d'énergie (29).

9. Dispositif de régulation thermostatique selon la revendication 8, **caractérisé en ce que**, dans le premier tronçon de tuyauterie (62), l'élément de soupape (11) commande un passage en fonction de la température du flux massique présent dans celui-ci et que, dans le deuxième tronçon de tuyauterie (72), une soupape d'étranglement (81) commande un passage en vue d'un équilibrage hydraulique, ou **en ce qu'**une soupape thermostatique destinée à réguler une température ambiante commande un passage appartenant au premier tronçon de tuyauterie (62) et que, dans le deuxième tronçon de tuyauterie (72), l'élément de soupape (11) commande un passage en fonction de la température du flux massique présent dans celui-ci, et que l'élément de soupape (11) comprenant une douille de réglage . (49) est disposé dans le deuxième tronçon de tuyauterie (72), ou **en ce que** l'élément de soupape (11) présente un dispositif d'actionnement (36) destiné à réguler une température ambiante, lequel agit entre la partie de corps (18) et la tige de transmission (16), et que ledit élément de soupape (11) est réalisé avec une douille de réglage (49) qui est déplaçable de manière axiale par rapport à la partie de corps (18), et **en ce que** ledit élément de soupape (11) peut être disposé sur l'élément de raccordement (66, 76) du premier ou du deuxième tronçon de tuyauterie (62, 72), et que sur l'autre tronçon de tuyauterie (72, 62) est prévu un bouchon de fermeture (85).

10. Dispositif de régulation thermostatique selon la revendication 9, **caractérisé en ce que** la température du flux massique présent dans la disposition de tuyaux (61), entre le tuyau d'amenée (64) et le tuyau de retour (74), active le mouvement de réglage de l'organe de réglage thermique (41).
